# FASCICULE DE BREVET EUROPEEN

(11) **EP 1 304 498 B1**
(45) Date de publication et mention de la délivrance du brevet: **03.08.2005**
(21) Numéro de dépôt: 02292499.7
(22) Date de dépôt: 10.10.2002
(51) Int. Cl.: F16F 13/10

(54) **Support antivibratoire hydraulique**
Hydraulisches, dämpfendes Lager
Hydraulic anti-vibration support

(30) Priorité: 18.10.2001 FR 0113437
(43) Date de publication de la demande: 23.04.2003
(73) Titulaire: HUTCHINSON, 75008 Paris (FR)
(72) Inventeur: Reh, Denis, 28200 La Chapelle du Noyer (FR); Thomazeau, Mikael, 28200 Chateaudun (FR)
(74) Mandataire: Burbaud, Eric

(56) Documents cités:
- EP-A- 0 939 243
- FR-A- 2 714 947

## Description

La présente invention est relative aux supports antivibratoires hydrauliques.

Plus particulièrement, l'invention concerne un support antivibratoire hydraulique destiné à relier entre eux deux éléments rigides aux fins d'amortissement, ce support comportant au moins :
- des première et deuxième armatures rigides destinées à être fixées aux deux éléments rigides à réunir,
- un corps en élastomère reliant entre elles les première et deuxième armatures,
- une chambre de travail remplie de liquide, partiellement délimitée par le corps en élastomère,
- au moins une chambre de compensation aisément déformable,
- et un clapet de découplage qui comporte une membrane souple déplaçable avec jeu entre des première et deuxième grilles rigides qui communiquent respectivement avec la chambre travail et avec la chambre de compensation, les première et deuxième grilles étant portées respectivement par des première et deuxième pièces de support rigides fixées à la deuxième armature.

Le document FR-A-2 714 947 décrit un exemple d'un tel support antivibratoire, qui donne toute satisfaction.

La présente invention a notamment pour but de perfectionner encore les supports antivibratoires de ce type pour réduire d'éventuels bruits de claquements susceptibles d'apparaître du fait des battements de la membrane souple du clapet de découplage entre les deux grilles de ce clapet, notamment lorsque le support antivibratoire sert à monter un groupe motopropulseur de véhicule sur la caisse de ce véhicule.

A cet effet, selon l'invention, un support antivibratoire du genre en question est caractérisé en ce que les première et deuxième grilles sont reliées par des liaisons élastiques respectivement aux première et deuxième pièces de support (les liaisons élastiques en question pouvant le cas échéant être constituées par deux zones d'une même pièce élastique).

Grâce à ces dispositions, on amortit les battements de la membrane du clapet de découplage contre les grilles de ce clapet du fait de la souplesse desdites liaisons élastiques, ce qui permet de limiter voire de supprimer les bruits de claquements dus au clapet de découplage.

Dans des modes de réalisation préférés de l'invention, on peut éventuellement avoir recours en outre à l'une et/ou à l'autre des dispositions suivantes :
- lesdites liaisons élastiques sont des liaisons en élastomère ;
- lesdites liaisons élastiques présentent une raideur comprise entre 100 N/mm et 200 N/mm selon un axe perpendiculaire aux première et deuxième grilles ;
- les première et deuxième pièces de support et les première et deuxième grilles forment ensemble une cloison qui sépare la chambre de travail et la chambre de compensation ;
- les première et deuxième pièces de support sont annulaires et entourent respectivement les première et deuxième grilles, lesdites première et deuxième grilles étant reliées respectivement aux première et deuxième pièces de support par des première et deuxième bagues d'élastomère qui constituent lesdites liaisons élastiques ;
- les première et deuxième pièces de support délimitent un passage étranglé qui fait communiquer en permanence la chambre de travail avec la chambre de compensation ;
- les première et deuxième bagues d'élastomère sont surmoulées et adhérisées respectivement sur les première et deuxième grilles et sur les première et deuxième pièces de support ;
- les première et deuxième grilles et les première et deuxième pièces de support sont des pièces de tôle découpées qui appartiennent à une cloison séparant la chambre de travail et la chambre de compensation, les première et deuxième pièces de support délimitant au moins partiellement un passage étranglé qui fait communiquer en permanence la chambre de travail avec la chambre de compensation ;
- les première et deuxième grilles comportent chacune une périphérie extérieure crénelée tandis que les première et deuxième pièces de support présentent chacune un périphérie intérieure crénelée, la périphérie intérieure crénelée de chaque pièce de support étant sensiblement complémentaire de la périphérie extérieure d'une des grilles ;
- la périphérie extérieure de chacune des première et deuxième grilles forme des créneaux faisant saillie radialement vers l'extérieur et la périphérie intérieure de chacune des première et deuxième pièces de support forme des créneaux faisant saillie radialement vers l'intérieur, les créneaux des première et deuxième grilles étant disposés sensiblement en correspondance mutuelle avec les créneaux des première et deuxième pièces de support.

D'autres caractéristiques et avantages de l'invention apparaîtront au cours de la description suivante de deux de ses formes de réalisation, données à titre d'exemples non limitatifs, en regard des dessins joints.

Sur les dessins :
- la figure 1 est une vue en coupe axiale d'un support antivibratoire selon une première forme de réalisation de l'invention,
- la figure 2 est une vue de détail de la cloison rigide qui sépare les deux chambres hydrauliques du support antivibratoires de la figure 1,
- la figure 3 est une vue en coupe axiale d'un support antivibratoire selon une deuxième forme de réalisation de l'invention,
- la figure 4 est une vue éclatée des différentes pièces constituant la cloison centrale du support antivibratoire de la figure 1,
- la figure 5 est une vue en perspective de la cloison centrale du support antivibratoire de la figure 1, sans la membrane de son clapet de découplage,
- et les figures 6 et 7 sont des vues en plan des grilles appartenant à la cloison centrale des figures 4 et 5.

Sur les différentes figures, les mêmes références désignent des éléments identiques ou similaires.

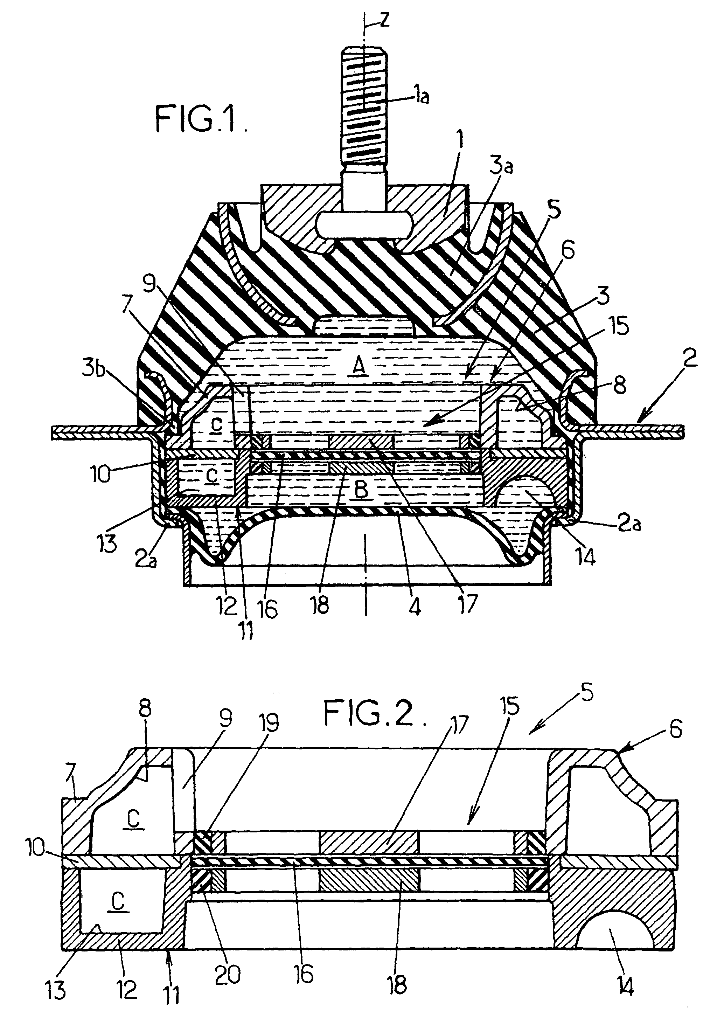

La figure 1 représente un support antivibratoire hydraulique destiné à relier par exemple un groupe motopropulseur de véhicule à la caisse de ce véhicule.

Ce support antivibratoire comporte :
- une première armature métallique rigide 1, qui dans l'exemple représenté a la forme d'une embase destinée à supporter par exemple le groupe motopropulseur du véhicule, notamment au moyen d'un goujon 1a,
- une deuxième armature métallique rigide 2, qui dans l'exemple représenté a une forme annulaire centrée sur l'axe vertical Z du goujon 1a, cette deuxième armature étant destinée à être fixée par exemple à la caisse du véhicule,
- un corps en élastomère 3 en forme de cloche sensiblement tronconique qui relie entre elles les première et deuxième armatures 1, 2, le corps en élastomère s'étendant selon l'axe Z entre d'une part, un sommet 3a surmoulé et adhérisé sur la première armature 1 et d'autre part, une base annulaire 3b surmoulée et adhérisée sur la deuxième armature 2, la paroi du corps en élastomère 3 étant suffisamment épaisse pour résister aux efforts de compression verticaux dus à la reprise du poids du bloc motopropulseur,
- une paroi mince et souple 4 en élastomère, présentant par exemple une forme de soufflet et reliée de façon étanche à la deuxième armature 2 (notamment par sertissage de pattes 2a de la deuxième armature) de façon à délimiter avec le corps en élastomère 3 un volume étanche rempli de liquide,
- une cloison rigide 5 qui est solidarisée avec la deuxième armature 2 et qui est serrée entre la base 3b du corps en élastomère et les pattes rabattues 2a de la deuxième armature, la cloison rigide 5 s'étendant perpendiculairement à l'axe Z et séparant le volume intérieur du support antivibratoire entre d'une part, une chambre de travail A délimitée partiellement par le corps en élastomère et d'autre part, une chambre de compensation B aisément déformable et délimitée partiellement par la paroi mince 4 en élastomère.

Les chambres de travail et de compensation A, B sont reliées entre elles de façon permanente par un passage étranglé C délimité à l'intérieur de la cloison rigide 5 et s'étendant angulairement au niveau de la périphérie extérieure de cette cloison.

Dans l'exemple particulier représenté sur le dessin, le passage étranglé C s'étend sur plus d'un tour et sur deux étages, et la cloison rigide 5 comporte trois pièces :
- une pièce supérieure 6 comportant une couronne 7 qui est réalisée par exemple par moulage en alliage léger et qui délimite intérieurement une gorge 8 ouverte vers le bas, cette gorge communiquant avec la chambre de travail A par l'intermédiaire d'une ouverture 9,
- une rondelle intermédiaire de tôle 10 qui est plaquée sous la couronne 7 de façon à fermer la gorge 8 vers le bas en délimitant l'étage supérieur du passage étranglé C, cette rondelle 10 présentant une ouverture (non représentée) qui fait communiquer l'étage supérieur du passage étranglé C avec l'étage inférieur de ce passage,
- et une pièce inférieure 11 comportant une couronne annulaire périphérique 12 qui est réalisée par exemple par moulage en alliage léger et qui délimite intérieurement une gorge 13 ouverte vers le haut et fermée par la rondelle 10 susmentionnée, la gorge 13 délimitant l'étage inférieur du passage étranglé C et communiquant avec la chambre de compensation B par une ouverture 14.

Bien entendu, le passage étranglé C pourrait s'étendre sur un seul étage et être délimité par exemple uniquement par deux pièces formant la cloison rigide 5.

Par ailleurs, comme on peut le voir plus en détails sur la figure 2, la cloison rigide 5 comporte en outre un clapet de découplage 15 qui comprend une membrane d'élastomère 16 montée avec un faible jeu (par exemple de l'ordre de 0,5 mm) entre deux grilles 17, 18 qui font communiquer les deux faces de la membrane 16 respectivement avec la chambre de travail A et avec la chambre de compensation B. Ainsi, la membrane 16 vient s'appliquer de façon étanche alternativement contre les deux grilles 17, 18 lorsque les armatures 1, 2 sont soumises à des mouvements vibratoires relatifs.

Les grilles 17, 18 peuvent être réalisées par exemple en un matériau rigide, notamment en métal.

La grille 17 appartient à la pièce supérieure 6 de la cloison rigide et est reliée élastiquement à la bague 7, avantageusement par une bague d'élastomère 19 qui est interposée radialement entre la grille 17 et la couronne 7 et qui est surmoulée et adhérisée sur ces deux pièces.

De la même façon, la grille 18 appartient à la pièce inférieure 11 de la cloison rigide et est reliée élastiquement à la couronne 12, de préférence par une bague 20 d'élastomère qui est interposée radialement entre la grille 18 et la couronne 12 et qui est surmoulée et adhérisée sur ces deux pièces.

De préférence, les bagues 19, 20 en élastomère présentent une raideur comprise entre 100 N/mm et 200 N/mm selon l'axe Z.

Ainsi, lorsque les première et deuxième armatures 1, 2 sont soumises à des mouvements vibratoires relatifs de faible amplitude (par exemple, inférieure à 1 mm) et de haute fréquence (par exemple, supérieure à 20Hz), la membrane 16 vibre entre les grilles 17, 18 en absorbant les vibrations.

Lorsque l'amplitude de ces vibrations devient suffisamment grande pour que la membrane 16 vienne battre alternativement contre les grilles 17, 18, la liaison élastique entre les grilles et les couronnes 6, 11 empêche que se produisent des bruits de claquements. La raideur des bagues d'élastomère 19, 20 est par ailleurs suffisamment élevée pour éviter des déplacements sensibles des grilles.

Par ailleurs, lorsque les première et deuxième armatures 1, 2 sont soumises à des mouvements vibratoires de grande amplitude (par exemple supérieure à 1 mm) et de basse fréquence (par exemple, inférieure à 20Hz), ces mouvements se traduisent par des transferts de liquide entre les chambres A et B par l'intermédiaire du passage étranglé C, qui amortit les vibrations notamment au voisinage de sa fréquence de résonance (généralement choisie entre 10 et 20 HZ).

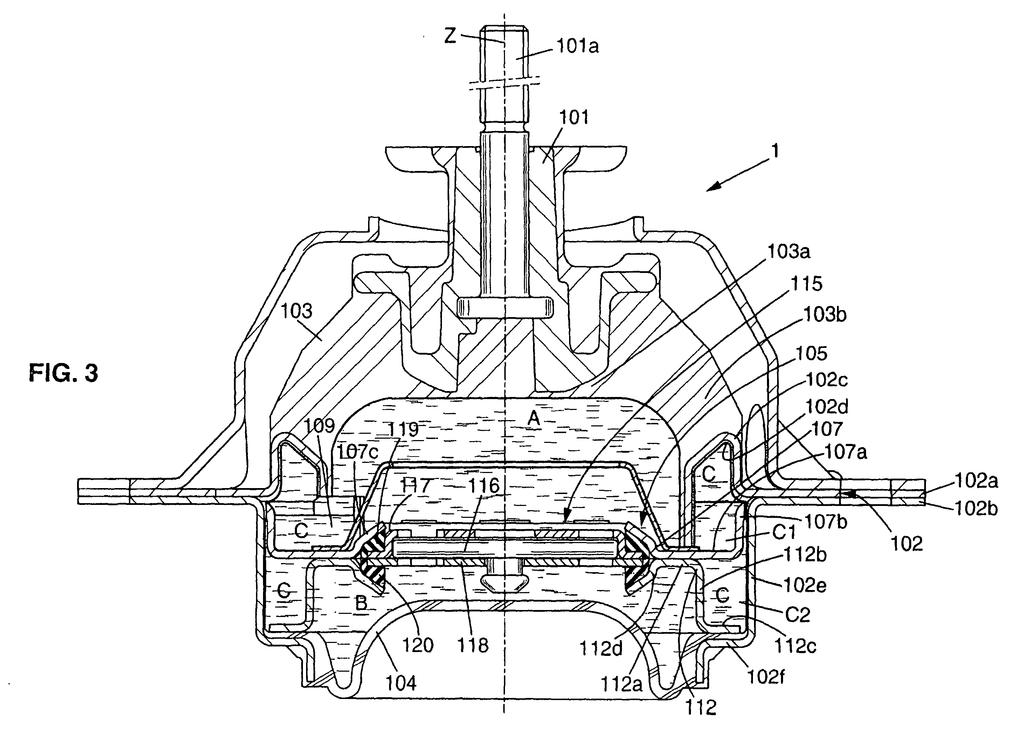

Dans la deuxième forme de réalisation de l'invention, représentée sur la figure 3, le support antivibratoire hydraulique comporte également, comme précédemment, des première et deuxième armatures métalliques rigides 101, 102 reliées entre elles par un corps en élastomère 103.

La première armature 101 peut être une embase supérieure destinée à être reliée par exemple au groupe motopropulseur du véhicule, notamment au moyen d'un goujon 101a.

La deuxième armature 102, quant à elle, présente une forme annulaire centrée sur un axe vertical Z et est destinée à être fixée par exemple à la caisse du véhicule.

Dans l'exemple représenté, la deuxième armature 102 comprend deux pièces de tôle 102a, 102b.

La pièce de tôle 102a peut comporter une partie intérieure emboutie 102c qui forme une gorge annulaire 102d ouverte vers le bas.

La pièce de tôle 102b comprend une paroi latérale 102e, pouvant être par exemple cylindrique et centrée sur l'axe Z, cette paroi latérale s'étendant vers le bas jusqu'à un bord d'appui annulaire intérieur 102f.

Le corps en élastomère 103 peut présenter par exemple une forme de cloche s'étendant selon l'axe Z entre d'une part un sommet 103a surmoulé et adhérisé sur la première armature 101 et d'autre part, une base annulaire 103b surmoulée et adhérisée sur la partie intérieure emboutie 102c de la pièce de tôle 102a. Comme dans l'exemple précédemment décrit, la paroi du corps en élastomère 103 est suffisamment épaisse pour résister aux efforts de compression verticaux dus à la reprise du poids du bloc de propulseur de véhicule.

Par ailleurs, le support antivibratoire comporte également une paroi mince et souple 104 en élastomère, qui peut notamment se présenter sous la forme d'un soufflet et dont le pourtour est relié de façon étanche à la deuxième armature 102. Dans l'exemple considéré ici, le pourtour de la paroi souple 104 est surmoulé et adhérisé sur le bord d'appui annulaire intérieur 102f.

La paroi souple 104 délimite, avec la deuxième armature 102 et le corps en élastomère 103, un boîtier fermé et rempli de liquide, qui est séparé en deux par une cloison centrale rigide 105 s'étendant sensiblement perpendiculairement à l'axe Z.

Une chambre de travail A remplie de liquide est ainsi délimitée entre la cloison 105 et le corps en élastomère 103, tandis qu'une chambre de compensation D aisément déformable, également remplie de liquide, est délimitée entre la cloison 105 et la paroi souple 104.

Comme dans la première forme de réalisation de l'invention, ces chambres de travail A, B peuvent avantageusement être reliées entre elles de façon permanente par un passage étranglé C qui est délimité au moins partiellement par la cloison rigide 5 et qui s'étend angulairement à la périphérie extérieure de cette cloison.

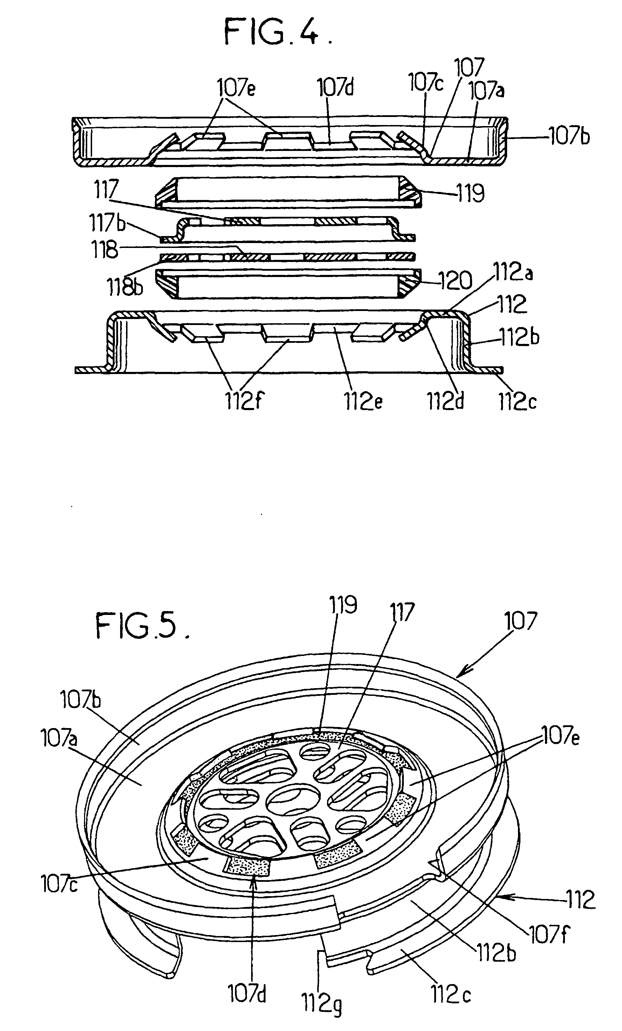

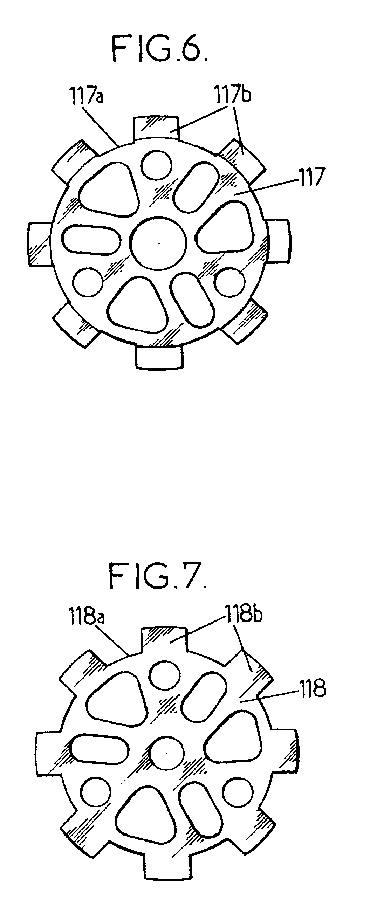

Dans l'exemple considéré ici, la cloison 105 comprend une première pièce de support 107 en tôle découpée et emboutie (voir également les figures 4 et 5). Cette première pièce de support présente une partie annulaire plane 107a qui est prolongée extérieurement par un bord annulaire relevé 107d et intérieurement par une partie emboutie 107c. La partie emboutie 107c présente un bord annulaire intérieur crénelé 107d comportant un pluralité de créneaux ou de dents faisant saillie radialement vers l'intérieur.

Le bord relevé 107b de la première pièce de support 107 est emboîté sensiblement sans jeu dans la paroi latérale 102e susmentionnée (voir figure 3), et présente une extrémité libre supérieure en contact étanche contre une couche d'élastomère surmoulée sur la face inférieure de la pièce de tôle 102a.

De plus, la base 103a du corps en élastomère et la partie emboutie 102c de la pièce de tôle 102a sont en appui étanche contre la partie annulaire plane 107a de la première pièce de support 107.

Dans l'exemple représenté, un déflecteur annulaire 106 en tôle peut éventuellement être interposé entre la base du corps en élastomère et la partie annulaire 107a de la première pièce de support, ce déflecteur annulaire présentant une partie tronconique qui s'étend dans la chambre de travail A en convergeant vers le haut.

La cloison rigide 105 comporte en outre une deuxième pièce de support 112 en tôle découpée et emboutie, cette deuxième pièce de support pouvant comporter une partie annulaire plane 112a qui est prolongée vers l'extérieur et vers le bas par un ressaut axial 112d lui-même prolongé radialement vers l'extérieur par un bord annulaire d'appui 112c. La partie annulaire plane 112a est par ailleurs prolongée vers l'intérieur par une partie intérieur emboutie 112d qui présente un bord intérieur crénelé 112d doté d'une pluralité de créneaux ou dents 112f faisant saillie radialement vers l'intérieur.

La partie annulaire pleine 112a de la deuxième pièce de support est en contact étanche contre la partie annulaire 107a de la première pièce de support, et le bord d'appui extérieur 112c de ladite deuxième pièce de support est en appui étanche contre le bord d'appui intérieur 102f susmentionné.

Ainsi, la première pièce de support 107 délimite avec la gorge 102d susmentionnée, un premier étage C1 du passage étranglé C, ce premier étage communiquant avec la chambre de travail A par une ouverture 109 ménagée dans la partie intérieure emboutie 102c.

Un deuxième étage C2 du passage étranglé C est par ailleurs délimité entre d'une part, les première et deuxième pièces de support 107, 112, et d'autre part, la paroi latérale 102e appartenant à la pièce de tôle 102b. Ce deuxième étage C2 communique avec le premier étage C1 par un évidement 107f ménagé dans la première pièce de support 107, et avec la chambre de compensation B par un évidement 112g ménagé dans la deuxième pièce de support 112 (voir figure 5).

Par ailleurs, les parties embouties 107c, 112d des première et deuxième pièces de support 107, 112 délimitent entre elles un logement dans lequel est disposé un clapet de découplage 115 qui remplit la même fonction que dans la première forme de réalisation et qui comprend une membrane souple 116 en élastomère montée avec un faible jeu axial entre deux grilles 117, 118 en tôle.

Dans l'exemple considéré ici, la première grille 117 est emboutie, tandis que la deuxième grille 118 est plane, mais ces deux grilles pourraient le cas échéant être de forme identique.

Les premières et deuxième grilles 117, 118 sont empilées l'une sur l'autre, et deux liaisons élastiques en élastomère, constituées par exemple par deux bagues en élastomère 119, 120 sont interposées respectivement entre chaque grille 117, 118 et la pièce de support correspondante 107, 112.

On notera que, le cas échéant, les bagues d'élastomère 119, 120 pourraient être réalisées d'une seule pièce qui serait alors engagée autour de la périphérie des grilles 117, 118. Dans ce cas, le support antivibratoire selon l'invention comporterait toujours deux liaisons élastiques reliant respectivement chaque grille 117, 118 à la pièce de support correspondant 107, 112, mais ces liaisons élastiques seraient constituées par deux zones d'une même pièce.

Comme on peut le voir sur les figures 6 et 7, les première et deuxième grilles 117, 118 comportent de préférence chacune une périphérie extérieure crénelée, respectivement 117a, 118a qui comprend des créneaux ou dents, respectivement 117d, 118d, qui font saillie radialement vers l'extérieur.

Ces périphéries crénelées 117a, 117b sont de préférence de forme complémentaire des périphéries intérieures crénelées 107d, 112e des première et deuxième pièces de support, de façon que les grilles 117, 118 puissent être réalisées par découpage à partir des mêmes flancs de tôle que les pièces de support 107, 112.

Avantageusement, comme on peut le voir en particulier sur la figure 4, les créneaux 117d, 118d, 107e, 112f sont disposés en correspondance mutuelle, de façon que le pincement des bagues d'élastomère 112, 120 entre lesdits créneaux ne génère pas d'effort de cisaillement trop important desdites bagues en élastomère. On notera que, selon une variante de l'invention, les bagues en élastomère 117, 118 pourraient être surmoulées et adhérisées respectivement l'une entre la première pièce de support 107 et la première grille 117, l'autre entre la deuxième pièce de support 112 et la deuxième grille 118.

## Revendications

1. Support antivibratoire hydraulique destiné à relier entre eux deux éléments rigides aux fins d'amortissement, ce support comportant au moins :
- des première et deuxième armatures rigides (1, 2 ; 101, 102) destinées à être fixées aux deux éléments rigides à réunir,
- un corps en élastomère (3 ; 103) reliant entre elles les première et deuxième armatures (1, 2 ; 101, 102),
- une chambre de travail (A) remplie de liquide, partiellement délimitée par le corps en élastomère (3 ; 103),
- au moins une chambre de compensation (B) aisément déformable,
- et un clapet de découplage (15 ; 115) qui comporte une membrane souple (16 ; 116) déplaçable avec jeu entre des première et deuxième grilles (17, 18 ; 117, 118) rigides qui communiquent respectivement avec la chambre travail (A) et avec la chambre de compensation (B), les première et deuxième grilles étant portées respectivement par des première et deuxième pièces de support (7, 12 ; 107, 112) rigides fixées à la deuxième armature (2),
**caractérisé en ce que** les première et deuxième grilles (17, 18 ; 117, 118) sont reliées par des liaisons élastiques (19, 20 ; 119, 120) respectivement aux première et deuxième pièces de support (7, 12 ; 107, 112).

2. Support antivibratoire selon la revendication 1 dans lequel lesdites liaisons élastiques (19, 20 ; 119, 120) sont des liaisons en élastomère.

3. Support antivibratoire selon la revendication 1 ou la revendication 2, dans lequel lesdites liaisons élastiques (19, 20 ; 119, 120) présentent une raideur comprise entre 100 N/mm et 200 N/mm selon un axe (Z) perpendiculaire aux première et deuxième grilles (17, 18 ; 117, 118).

4. Support antivibratoire selon l'une quelconque des revendications précédentes dans lequel les première et deuxième pièces de support (7, 12 ; 107, 112) et les première et deuxième grilles (17, 18 ; 117, 118) forment ensemble une cloison (5 ; 105) qui sépare la chambre de travail (A) et la chambre de compensation (B).

5. Support antivibratoire selon la revendication 4, dans lequel les première et deuxième pièces de support (7, 12 ; 107, 112) sont annulaires et entourent respectivement les première et deuxième grilles (17, 18 ; 117, 118), lesdites première et deuxième grilles étant reliées respectivement aux première et deuxième pièces de support (7, 12 ; 107, 112) par des première et deuxième bagues d'élastomère (19, 20 ; 119, 120) qui constituent lesdites liaisons élastiques.

6. Support antivibratoire selon la revendication 5, dans lequel les première et deuxième pièces de support (7, 12 ; 107, 112) délimitent un passage étranglé (C) qui fait communiquer en permanence la chambre de travail (A) avec la chambre de compensation (B).

7. Support antivibratoire selon la revendication 5 ou la revendication 6, dans lequel les première et deuxième bagues d'élastomère (19, 20 ; 119, 120) sont surmoulées et adhérisées respectivement sur les première et deuxième grilles (17, 18 ; 117, 118) et sur les première et deuxième pièces de support (7, 12 ; 107, 112).

8. Support antivibratoire selon l'une quelconque des revendications précédentes, dans lequel les première et deuxième grilles (117, 118) et les première et deuxième pièces de support (107, 112) sont des pièces de tôle découpées qui appartiennent à une cloison (105) séparant la chambre de travail (A) et la chambre de compensation (B), les première et deuxième pièces de support délimitant au moins partiellement un passage étranglé (C) qui fait communiquer en permanence la chambre de travail (A) avec la chambre de compensation (B).

9. Support antivibratoire selon la revendication 8, dans lequel les première et deuxième grilles (117, 118) comportent chacune une périphérie extérieure crénelée (117a, 118a) tandis que les première et deuxième pièces de support (107, 112) présentent chacune un périphérie intérieure crénelée (107d, 112e), la périphérie intérieure crénelée (107d, 112e) de chaque pièce de support étant sensiblement complémentaire de la périphérie extérieure crénelée (117a, 118a) d'une des grilles.

10. Support antivibratoire selon la revendication 9, dans lequel la périphérie extérieure de chacune des première et deuxième grilles forme des créneaux (117b, 118b) faisant saillie radialement vers l'extérieur et la périphérie intérieure de chacune des première et deuxième pièces de support forment des créneaux (107e, 112f) faisant saillie radialement vers l'intérieur, les créneaux des première et deuxième grilles étant disposés sensiblement en correspondance mutuelle avec les créneaux des première et deuxième pièces de support.

## Patentansprüche

1. Hydraulisches schwingungsdämpfendes Lager, welches dazu bestimmt ist, zwei starre Elemente zur Dämpfung miteinander zu verbinden, wobei dieses Lager mindestens Folgendes aufweist:
- eine erste und eine zweite starre Armatur (1, 2; 101, 102), welche dazu bestimmt sind, an den zwei zu verbindenden starren Elementen befestigt zu werden,
- einen Elastomerkörper (3; 103), welcher die erste und die zweite Armatur (1, 2; 101, 102) miteinander verbindet,
- eine mit Flüssigkeit gefüllte und teilweise durch den Elastomerkörper (3; 103) begrenzte Arbeitskammer (A),
- mindestens eine leicht verformbare Ausgleichskammer (B) und
- eine Entkopplungsklappe (15; 115) mit einer flexiblen Membran (16; 116), welche zwischen einem ersten und einem zweiten Gitter (17, 18; 117, 118) mit Spiel verschiebbar ist, welche mit der Arbeitskammer (A) bzw. der Ausgleichskammer (B) kommunizieren, wobei das erste und das zweite Gitter von einem ersten bzw. einem zweiten Trageteil (7, 12; 107, 112) getragen werden, welche an der zweiten Armatur (2) befestigt sind,
**dadurch gekennzeichnet, dass** das erste und das zweite Gitter (17, 18; 117, 118) über elastische Verbindungen (19, 20; 119, 120) mit dem ersten bzw. dem zweiten Trageteil (7, 12; 107, 112) verbunden sind.

2. Schwingungsdämpfendes Lager nach Anspruch 1, bei dem die genannten elastischen Verbindungen (19, 20; 119, 120) Elastomerverbindungen sind.

3. Schwingungsdämpfendes Lager nach Anspruch 1 oder nach Anspruch 2, bei dem die genannten elastischen Verbindungen (19, 20; 119, 120) eine Steifigkeit entlang einer senkrecht zu dem ersten und zu dem zweiten Gitter (17, 18; 117, 118) verlaufenden Achse (Z) aufweisen, welche zwischen 100 N/mm und 200 N/mm liegt.

4. Schwingungsdämpfendes Lager nach einem der vorhergehenden Ansprüche, bei dem das erste und das zweite Trageteil (7, 12; 107, 112) und das erste und das zweite Gitter (17, 18; 117, 118) zusammen eine Trennwand (5; 105) bilden, welche die Arbeitskammer (A) von der Ausgleichskammer (B) trennt.

5. Schwingungsdämpfendes Lager nach Anspruch 4, bei dem das erste und das zweite Trageteil (7, 12; 107, 112) ringförmig sind und das erste bzw. das zweite Gitter (17, 18; 117, 118) umfassen, wobei das genannte erste und das genannte zweite Gitter mit dem ersten bzw. dem zweiten Trageteil (7, 12; 107, 112) über einen ersten und einen zweiten Elastomerring (19, 20; 119, 120) verbunden sind, welche die genannten elastischen Verbindungen bilden.

6. Schwingungsdämpfendes Lager nach Anspruch 5, bei dem das erste und das zweite Trageteil (7, 12; 107, 112) einen verengten Durchgang (C) begrenzen, durch welchen die Arbeitskammer (A) und die Ausgleichskammer (B) permanent kommunizieren.

7. Schwingungsdämpfendes Lager nach Anspruch 5 oder nach Anspruch 6, bei dem der erste und der zweite Elastomerring (19, 20; 119, 120) an dem ersten bzw. dem zweiten Gitter (17, 18; 117, 118) sowie an dem ersten bzw. dem zweiten Trageteil (7, 12; 107, 112) daran zum Anhaften gebracht sind.

8. Schwingungsdämpfendes Lager nach einem der vorhergehenden Ansprüche, bei dem das erste und das zweite Gitter (117, 118) sowie das erste und das zweite Trageteil (107, 112) ausgeschnittene Blechteile sind, welche zu einer die Arbeitskammer (A) von der Ausgleichskammer (B) trennenden Trennwand (105) gehören, wobei das erste und das zweite Trageteil zumindest teilweise einen verengten Durchgang (C) begrenzen, durch welchen die Arbeitskammer (A) und die Ausgleichskammer (B) permanent kommunizieren.

9. Schwingungsdämpfendes Lager nach Anspruch 8, bei dem das erste und das zweite Gitter (117, 118) jeweils einen gezackten Außenumfang (117a, 118a) aufweisen, während das erste und das zweite Trageteil (107, 112) jeweils einen gezackten Innenumfang (107d, 112e) aufweisen, wobei der gezackte Innenumfang (107d, 112e) jedes Trageteils weitestgehend komplementär zu dem gezackten Außenumfang (117a, 118a) eines der Gitter ist.

10. Schwingungsdämpfendes Lager nach Anspruch 9, bei dem der Außenumfang jedes der beiden Gitter Auszackungen (117b, 118b) bildet, welche radial nach außen ragen, und der Innenumfang des ersten bzw. des zweiten Trageteils Auszackungen (107e, 112f) bildet, welche radial nach innen ragen, wobei die Auszackungen des ersten und des zweiten Gitters derart angeordnet sind, dass sie und die Auszackungen des ersten und des zweiten Trageteils weitestgehend miteinander übereinstimmen.

## Claims

1. A hydraulic vibration-damping support serving to interconnect two rigid elements for damping purposes, the support comprising at least:
first and second rigid strength members (1, 2; 101, 102) serving to be fixed to respective ones of the two rigid elements to be interconnected;
an elastomer body (3; 103) interconnecting the first and second strength members (1, 2; 101, 102);
a working chamber (A) filled with liquid, and defined in part by the elastomer body (3; 103);
at least one easily-deformable compensation chamber (B); and
a decoupling flap (15; 115) which comprises a flexible membrane (16; 116) that is mounted to move with clearance between first and second rigid gratings (17, 18; 117, 118) that communicate respectively with the working chamber (A) and with the compensation chamber (B), the first and second gratings being carried respectively by first and second rigid support pieces (7, 12; 107, 112) fixed to the second strength member (2);
said vibration-damping support being **characterized in that** the first and second gratings (17, 18; 117, 118) are connected by elastic links (19, 20; 119, 120) to respective ones of the first and second support pieces (7, 12; 107, 112).

2. A vibration-damping support according to claim 1, in which said elastic links (19, 20; 119, 120) are elastomer links.

3. A vibration-damping support according to claim 1 or claim 2, in which said elastic links (19, 20; 119, 120) have stiffness lying in the range 100 N/mm to 200 N/mm along an axis (Z) that is perpendicular to the first and second gratings (17, 18; 117, 118).

4. A vibration-damping support according to any preceding claim, in which the first and second support pieces (7, 12; 107, 112) and the first and second gratings (17, 18; 117, 118) together form a partition (5; 105) which separates the working chamber (A) from the compensation chamber (B).

5. A vibration-damping support according to claim 4, in which the first and second support pieces (7, 12; 107, 112) are annular and surround respective ones of the first and second gratings (17, 18; 117, 118), said first and second gratings being connected to respective ones of the first and second support pieces (7, 12; 107, 112) via first and second elastomer bands (19, 20; 119, 120) which constitute said elastic links.

6. A vibration-damping support according to claim 5, in which the first and second support pieces (7, 12; 107, 112) define a constricted passage (C) which puts the working chamber (A) continuously into communication with the compensation chamber (B).

7. A vibration-damping support according to claim 5 or claim 6, in which the first and second elastomer bands (19, 20; 119, 120) are molded over and bonded to respective ones of the first and second gratings (17, 18; 117, 118) and respective ones of the first and second support pieces (7, 12; 107, 112).

8. A vibration-damping support according to any preceding claim, in which the first and second gratings (117, 118) and the first and second support pieces (107, 112) are pieces of cut-out sheet metal that are part of a partition (105) separating the working chamber (A) from the compensation chamber (B), the first and second support pieces defining at least in part a constricted passage (C) which puts the working chamber (A) continuously into communication with the compensation chamber (B).

9. A vibration-damping support according to claim 8, in which each of the first and second gratings (117, 118) has a crenelated outer periphery (117a, 118a) while each of the first and second support pieces (107, 112) has a crenelated inner periphery (107d, 112e), the crenelated inner periphery (107d, 112e) of each support piece being substantially complementary to the crenelated outer periphery (117a, 118a) of one of the gratings.

10. A vibration-damping support according to claim 9, in which the outer periphery of each of the first and second gratings forms crenellations (117b, 117b) that project radially outwards, and the inner periphery of each of the first and second support pieces forms crenellations (107e, 112f) that project radially inwards, the crenellations of the first and second gratings being disposed substantially in mutual register with the crenellations of the first and second support pieces.
